Europäisches Patentamt

**European Patent Office**

Office européen des brevets

(11) Publication number: **0 052 992**
A1

# EUROPEAN PATENT APPLICATION

(21) Application number: 81305419.4

(22) Date of filing: 17.11.81

(51) Int. Cl.³: **G 01 F 3/00**
**G 01 F 3/20, G 01 F 3/24**

(30) Priority: 24.11.80 US 210088
01.06.81 US 268940

(43) Date of publication of application:
02.06.82 Bulletin 82/22

(84) Designated Contracting States:
CH DE FR GB IT LI SE

(71) Applicant: SPERRY CORPORATION
1290, Avenue of the Americas
New York, N.Y. 10019(US)

(72) Inventor: Earle, Richard Leroy
16 Bates Street
Mendon Massachusetts 01756(US)

(72) Inventor: Somes, Richard Kenneth
23 Bailey Road
Berlin Massachusetts 01503(US)

(72) Inventor: Dejong, Joannes Nicolaas Mattheus
14 Cherry Lane
West Ford Massachusetts 01886(US)

(74) Representative: Singleton, Jeffrey
Sperry Gyroscope Patent Department Downshire Way
Bracknell, Berkshire, RG12 1QL(GB)

(54) Flowmeters.

(57) A flowmeter comprising means (12) for conducting fluid the rate of flow of which is to be measured, flexure means (15) arranged to undulate in response to fluid flow, whereby a travelling wave is propagated along the flexure means, and means (23, 24) for detecting a parameter of the travelling wave which is a function of the rate of flow of the fluid. The parameter of the travelling wave may be the frequency or the velocity of propagation thereof, for example.

FIG.1.

EP 0 052 992 A1

Croydon Printing Company Ltd

0052992

## Flowmeters

This invention relates to flowmeters, i.e. devices for measuring flow rates.

The monolithic microprocessor has revolutionised process control technology, but it has not yet found widespread application in practical electrohydraulic systems. Heretofore, an obstacle to microprocessor controlled electrohydraulic systems was the absence of an inexpensive flowmeter which would easily interface with digital logic.

One attempt to interface a flowmeter with digital logic is described in U.S. Patent Specification No. 4,033,188 which discloses an electronic data processing system for a vortex-type flowmeter wherein the fluid to be measured is directed past a vortex-producing element to induce fluidic variations whose frequency is a function of flow rate. These variations are detected by a sensor yielding a signal having an AC component whose frequency represents the uncorrected flow rate and a DC component magnitude which represents the temperature of the fluid. In order to correct for the effect of temperature on the accuracy of the reading, the signal components are separated from each other and converted into corresponding digital values which are fed into the data processing system to which are also applied digital values representing the fluid characteristics, the system producing an output signal representing the true flow rate.

The above-described system is inherently analog and requires relatively complex electronic circuitry to interface with the digital circuitry associated with the microprocessor. Moreover, the system is sensitive to temperature variations which must be corrected. Accordingly, there is a need for a simpler and less expensive flowmeter which is well adapted for digital logic interfacing.

According to the present invention a flowmeter comprises means for conducting fluid the rate of flow of which is to be measured, flexure means arranged to undulate in response to fluid flow, whereby a travelling wave is propagated along the flexure means, and means for detecting a parameter of the travelling wave which is a function of the rate of flow of the fluid.

The parameter of the travelling wave which is detected may be that of frequency which is a function of the flow rate, or may be that of the velocity of propagation of the travelling wave which is proportional to flow rate and which provides a much faster response time than that of frequency detection.

When considering frequency, the frequency detecting means may include a light source and photodetector which is responsive to light from the light source reflected from a retroreflective portion of the flexure means. Alternatively, the frequency detecting means may include pressure transducer means, strain gauge means, capacitance means or electromagnetic pick-off means. In a further alternative arrangement, the flexure means may be fabricated from a piezoelectric material.

When considering velocity of propagation, this may be detected by providing two known locations on the flexure means and measuring the distance therebetween as well as measuring the travel time, or phase difference, of a travelling wave between the known locations. Preferably, either strain gauges or piezoelectric elements are disposed at known locations on the flexure means, and as the latter flexes or undulates due to fluid flow, output signals are generated. Since the distances between the strain gauges or piezoelectric elements are known, the velocity of the travelling wave may be determined by timing and processing the generated output signals. In an alternative embodiment, the flexure means may be fabricated from a piezoelectric material which is metallised in known locations. Leads coupled to the metallised locations provide the necessary output signals as the piezoelectric flexure means flexes or undulates.

The present invention thus provides an inexpensive flowmeter which can be easily interfaced with a microprocessor and which is substantially insensitive to temperature variations. The flowmeter includes a strip of flexible material having a length X which is forced to occupy a length L of the conducting means, with $L < X$. As a result, the flexible material buckles and assumes a wavelike shape inside the conducting means and when fluid is forced to flow through the latter, the flexible material undulates in a travelling wave type of displacement and the frequency of the travelling wave is a function of the volumetric flow rate of the fluid, or the velocity of propagation is proportional to the flow rate.

Flowmeters in accordance with the present invention will now be described in greater detail, by way of example, with reference to the accompanying drawings, in which:-

Figure 1 is a plan view of a first embodiment of the present invention,

Figure 2 is a section on line II-II of Figure 1,

Figures 3A and 3B are theoretical wave shapes for the flexible member associated with the present invention,

Figure 4 is a graph of the travelling wave frequency as a function of flow rate,

Figure 5 is a view similar to Figure 1 but of a second and preferred embodiment,

Figure 6 is a view on the line VI-VI of Figure 5,

Figure 7 is an enlarged plan view of a portion of Figure 5,

Figure 8 is a view similar to Figure 7 but showing an alternative arrangement, and

Figures 9A and 9B are side and plan views respectively, of a component for inclusion into the embodiment of Figure 5.

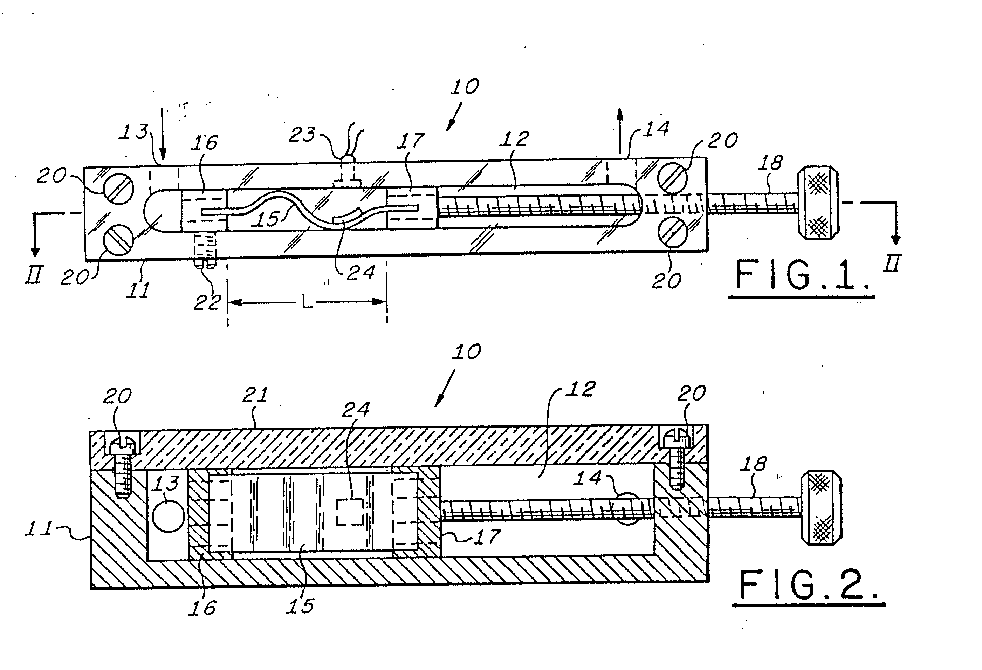

Referring now to Figures 1 and 2, the flowmeter of the first embodiment of the present invention is indicated generally at 10 and includes a housing 11 having a channel 12 formed therein. Preferably, the housing 11 is made of aluminium bar stock or other suitable material and is sealed with a transparent cover 21 which is made of plexiglass or other suitable material. The transparent cover 21 is secured by screws 20 which are threaded into the housing 11. The channel 12 is generally rectangular and is approximately 8" (20 cms.) in length and includes an inlet 13 and an outlet 14 through which a continuous flow of fluid may be conducted. Disposed within the channel 12 is a flexible membrane 15 of a predetermined length X which is forced to occupy a predetermined length L of a portion of channel 12. The flexible membrane 15 is preferably fabricated from mylar or other suitable polymer, or it may be fabricated from a beryllium copper compound or other suitable metal. The flexible membrane 15 has dimensions of approximately 0.005" (0.125 mm.) thick, 13/16" (2.03 cms.) wide, and 3" (7.5 cms.) long. Moreover, the flexible membrane 15 should be accurately dimensioned in width such that there is adequate clearance for free movement of the membrane inside the channel 12 without excessive leakage flow. Forcing the flexible membrane 15 to assume length L in a portion of the channel 12 results in a buckling of the membrane which is hereinafter described in greater detail.

The ends of the flexible membrane 15 are held by membrane holders 16, 17 through the use of clamps, epoxy or a tongue and groove type of arrangement. The membrane holders 16, 17 are slotted to allow the passage of fluid therethrough. A lead screw 18 is threaded through the housing 11 and coupled to the membrane holder 17, such that the distance L between the membrane holders 16, 17 may be precisely adjusted. A set screw 22 is threaded through the housing 11 to secure the membrane holder 16 within the channel 12. It should be noted, however, that in further embodiments of the present invention the ends of the flexible membrane 15 may be either free or hinged. An optical detector 23 comprised of a light source and a photodetector is disposed within the housing 11 to detect the displacement of the flexible membrane 15 which has a retroreflective strip 24 attached thereto on the side adjacent the detector 23. Alternatively, the flexible membrane may be made from a retroreflective material. In further embodiments of the invention, the optical detector 23 may be replaced by other types of detection devices, e.g. pressure transducers, strain gauges, piezoelectric strain gauges, thermistors, capacitance devices, or electromagnetic pick-off devices. Alternatively, the flexible membrane 15 itself could be fashioned from a piezoelectric material, and an output signal indicative of the frequency of the flexible membrane could be derived. In the embodiment of Figures 1 and 2, however, the retroreflective strip 24 causes a pulsed output signal each time the flexible membrane 15 and the retroreflective strip pass the optical detector 23, thereby providing an indication of the frequency of the travelling wave which is propagated along the undulating flexible membrane 15 as a result of fluid flowing through the channel 12.

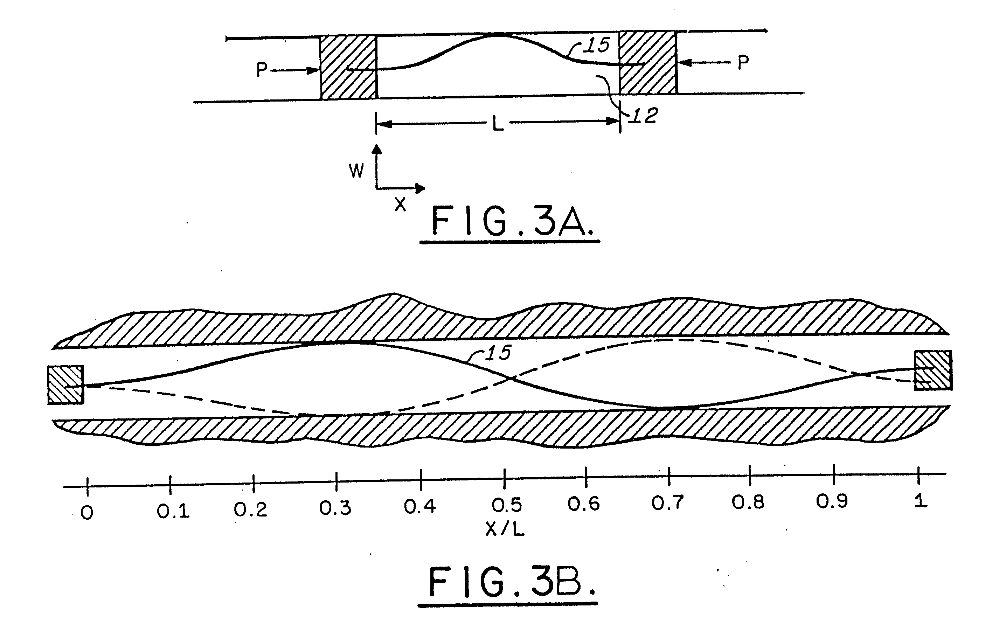

Referring now to Figures 3A and 3B, theoretical wave shapes for the flexible membrane 15 are depicted therein. The theoretical wave shapes may be achieved through mathematical modelling. For example, the shape of the flexible membrane 15 inside the channel 12 can be determined by solving the differential equations that model the buckling of beams or columns, i.e.

$$\frac{d^4w}{dx^4} + k^2 \frac{d^2w}{dx^2} = 0 \qquad\qquad (1)$$

where $k^2 = P/EI$, $P$ = the buckling force applied to the membrane, $E$ = Young's modulus, $I$ = the moment of inertia of the membrane's cross-section, $x$ = length, $w$ = displacement. The conditions which are illustrated in Figure 3A and which are defined by the aforementioned equation (1) are based on the assumptions that the deflections are small and that the membrane 15 follows Hook's law. A general solution that satisfies the above differential equation is given by:-

$$w = C_1 \sin kx + C_2 \cos kx + C_3x + C_4 \qquad (2)$$

with the following boundary conditions:

$$\frac{dw}{dx} = 0 \text{ and } w = 0 \text{ at } x = 0 \text{ and } x = L \text{ (length)} \quad (3)$$

Substituting the boundary conditions (3) in the solution (2) yields:-

$$C_4 = -C_2 \quad (4a)$$

$$C_3 = -kC_1 \quad (4b)$$

$$C_1 (\cos kL - 1) - C_2 \sin kL = 0 \quad (4c)$$

$$C_1 (\sin kL - kL) + C_2 (\cos kL - 1) = 0 \quad (4d)$$

Eliminating $C_1$ from the last two equations and simplification yields:-

$$C_2 \sin \frac{kL}{2} \left( \sin \frac{kL}{2} - \frac{kL}{2} \cos \frac{kL}{2} \right) = 0 \quad (5)$$

A first possible solution is provided when $\sin \frac{kL}{2} = 0 \rightarrow \frac{kL}{2} = n\pi$ and where $n = 1, 2, 3$. The buckling load $P_n$ becomes:-

$$P_n = \frac{4n^2 \pi^2 EI}{L^2}$$

For $n = 1$, the smallest buckling load $P_1$ becomes

$$P_1 = \frac{4\pi^2 EI}{L^2}$$

and the shape of the membrane becomes:

$$w = C_2 \left( 1 - \cos \frac{2\pi x}{L} \right)$$

The constant $C_2$ cannot be determined but is chosen such that the membrane 15 just touches the wall of the channel 12 as shown in Figure 3A. Obviously, the solution illustrated in Figure 3A for the lowest buckling load is not a practical wave shape since there will always be a leakage path through the flow meter along the wall of channel 12 which is not in contact with the flexible membrane 15. A second solution is provided when:

$$\sin \frac{kL}{2} - \frac{kL}{2} \cos \frac{kL}{2} = 0$$

$$\tan \frac{kL}{2} = \frac{kL}{2}$$

The smallest root of the above equation is:

$$\frac{kL}{2} = 4.493$$

which yields a buckling load of

$$P = \frac{80.64EI}{L^2}$$

This buckling load is larger than the smallest buckling load (n = 1) associated with the first solution but is smaller than the n = 2 solution. This indicates that if the load is gradually increased, the membrane will assume a cosine shape from the first solution and then the membrane will assume the shape associated with the second solution. This shape can be obtained through eliminating $C_4$, $C_3$, $C_2$ from Equation (4) and substituting those in Equation (2) yielding:-

$$w = C_1 \left[ \sin kx + \frac{\cos kL - 1}{\sin kL} (\cos kx - 1) - Kx \right]$$

Considerable simplifications will finally yield

$$w = C_1 \left[ -\sqrt{1 + \left(\frac{kL}{2}\right)^2} \sin k \left( x - \frac{L}{2} \right) - k \left( x - \frac{L}{2} \right) \right]$$

or

$$w = C_1 \left[ -\sqrt{1 + \left(\frac{kL}{2}\right)^2} \sin \frac{kL}{2}\left( \frac{2x}{L} - 1 \right) - \frac{kL}{2}\left( \frac{2x}{L} - 1 \right) \right] \quad (6)$$

The above solution consists of the sum of a straight line and a sine wave with a period of $kL/2\pi = 0.7$. Equation (6) is graphically depicted in Figure 3B. Equation (6) also provides a predetermination of where the membrane 15 touches the channel wall, i.e. when dw/dx vanishes, and this occurs when x/L = 0.3 and x/L = 0.7. The second derivative $d^2w/dx^2$ is proportional to a moment which may be expressed by the following relationship:-

$$M = EI \frac{dw^2}{dx^2} \quad (7)$$

Computing this second derivative, it is found that the moment vanishes at x/L = 0.15, x/L = 0.5, and x/L = 0.85. The third derivative determines that the moment reaches a maximum at x/L = 0.32 and x/L = 0.67. The value of this maximum moment can be computed by substituting these values of x/L in equation (7). Accordingly, it can be appreciated that the flexible membrane 15 can be caused to deform in accordance with the mathematical relationships described above when a buckling load is applied to the membrane.

When a fluid is forced through the channel 12, a wave results and the flexible membrane 15 buckles or undulates from its initial shape to a second shape having a $180^\circ$ difference in phase. During the $180^\circ$ phase change a volume of fluid is displaced and a relationship between volumetric flow rate Q and the frequency $\underline{f}$ of the travelling wave associated with the undulating flexible membrane 15 may also be achieved through mathematical modelling. The fluid flows through the channel 12 with an average velocity $V_{ave}$. Since the travelling wave flowmeter is a positive displacement type flowmeter, the wave velocity equals the average fluid velocity, and the frequency of the wave can be expressed as:-

$$f = \frac{V_{ave}}{\lambda}$$

where $\lambda$ = wavelength

$V_{ave}$ = average fluid velocity

$f$ = frequency of the wave

The average velocity is related to the volumetric flow rate by the equation:-

$$V_{ave} = \frac{Q}{A}$$

where Q = volumetric flow rate

A = the cross-sectional area of the channel 12.

Hence, the frequency of the travelling wave can be expressed as:-

$$f = \frac{Q}{A\lambda}$$

In operation, therefore, the flowmeter 10 utilises the frequency of the flexible member 15 in order to determine the volumetric flow rate Q. Referring back to Figure 1, it can be appreciated that a continuous flow of fluid may be conducted into the channel 12 through the inlet 13. The incoming fluid is conducted through the slotted passages in the membrane holder 16 and flows along the flexible membrane 15, thereby causing it to undulate. The fluid is conducted through the slotted passages in the membrane holder 17 and out of the channel 12 via the outlet 14. As the flexible member 15 undulates between a first wave shape and a second wave shape having a 180$^{\circ}$ phase difference, the retroreflective strip 24 passes back and forth in front of the optical detector 23, thereby providing a pulsed output signal indicative of the frequency of the undulating flexible member 15. This pulsed output signal can be readily applied to a digital electronic processing means such as a counter coupled to a microprocessor to determine the volumetric flow rate in accordance with the algorithms described above.

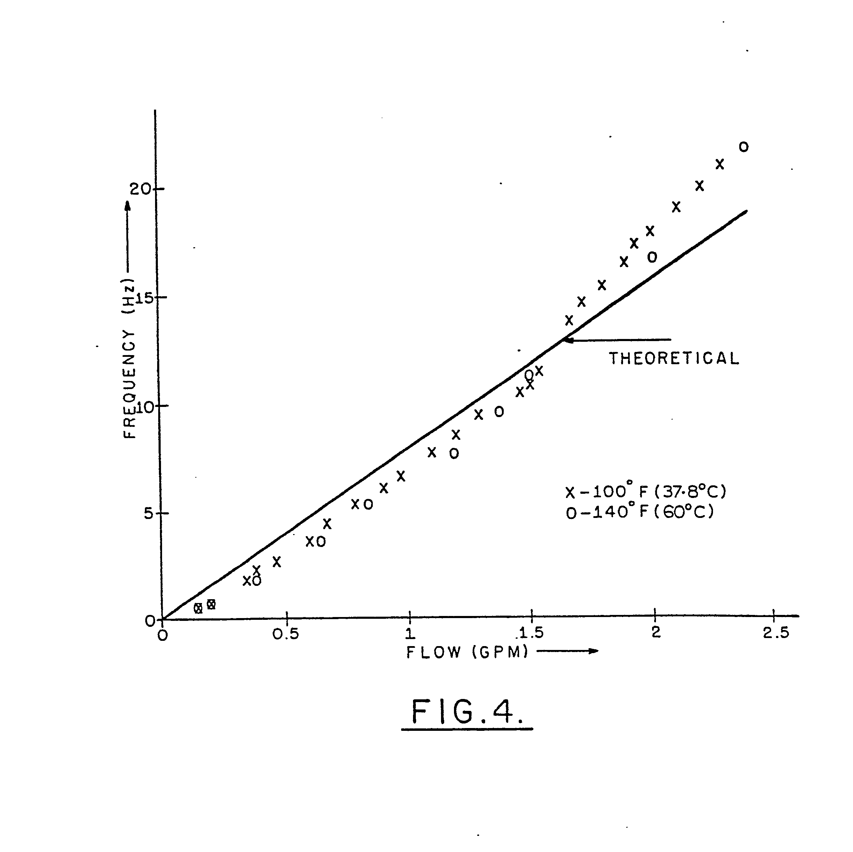

Referring now to Figure 4, a graphic representation of the frequency of the flexible membrane 15 is plotted as a function of the flow rate of oil through the flowmeter 10. In experiments, the oil flow rate was varied from zero to approximately 2.5 gpm (11.4 litres per minute) at a temperature of 100$^{\circ}$F (37.8$^{\circ}$C) and 140$^{\circ}$F (60$^{\circ}$C), and the frequency of the travelling wave was measured. It will be appreciated that the experimental results conformed well to the theoretical expectations given by the solid line in Figure 4. Moreover, it should be noted that the positive displacement nature of the travelling wave flowmeter 10 suggests that it is substantially insensitive to temperature variations in the flowing fluid.

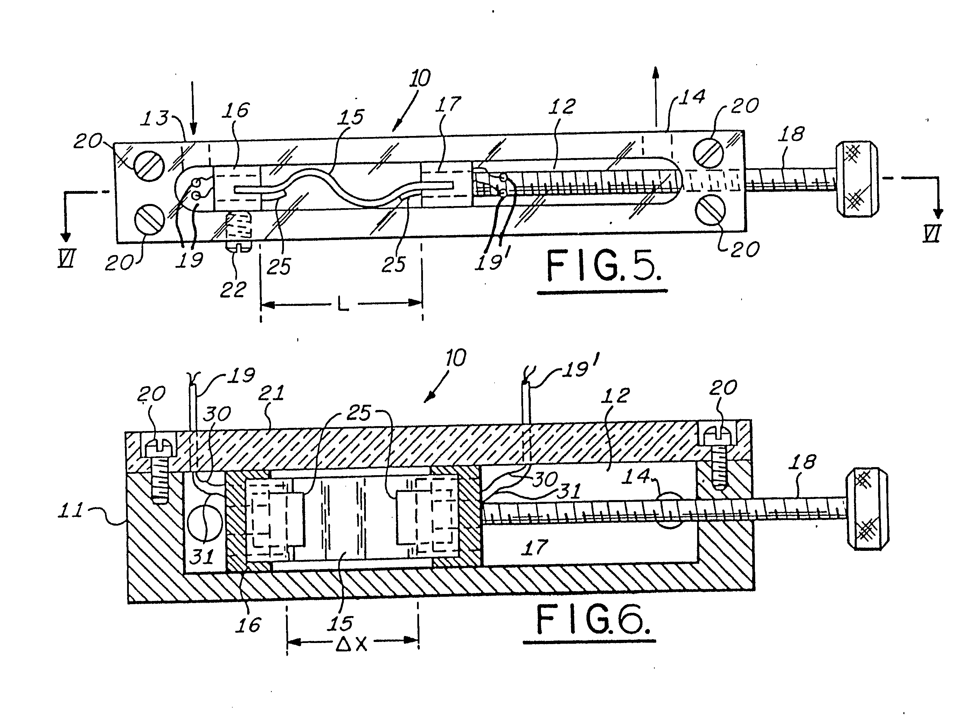

The response time of the embodiment of Figures 1 and 2 is, however, relatively slow since it is dictated by the frequency of the travelling wave in the undulating flexible membrane 15. This slow response time may be undesirable in certain circumstances and, therefore, a preferred embodiment is that illustrated in Figures 5, 6 and 7 which measures the flow rate based on a different parameter of the travelling wave in the flexible membrane which gives a much faster response time.

Referring now to Figures 5, 6 and 7, the basic construction of the flowmeter 10 is similar to that of Figures 1 and 2 and like parts carry the same reference numerals. The essential difference between the two embodiments is that the frequency detector of Figures 1 and 2 in the form of the detector 23 and retroreflective member 24 is replaced by two piezoelectric elements 25 attached to the flexible membrane 15 adjacent the respective membrane holders 16 and 17. The precise locations of the piezoelectric elements (which may be in the form of a polymer) are predetermined. It should be noted that in further embodiments of the present invention, strain gauges of the type having a resistive element whose output is proportional to the amount of deformation may be substituted for the strips of piezoelectric polymer 25. In still further embodiments of the invention, the flexible membrane 15 itself may be fabricated from a piezoelectric material, such as a polymer, instead of employing the strips of piezoelectric polymer 25.

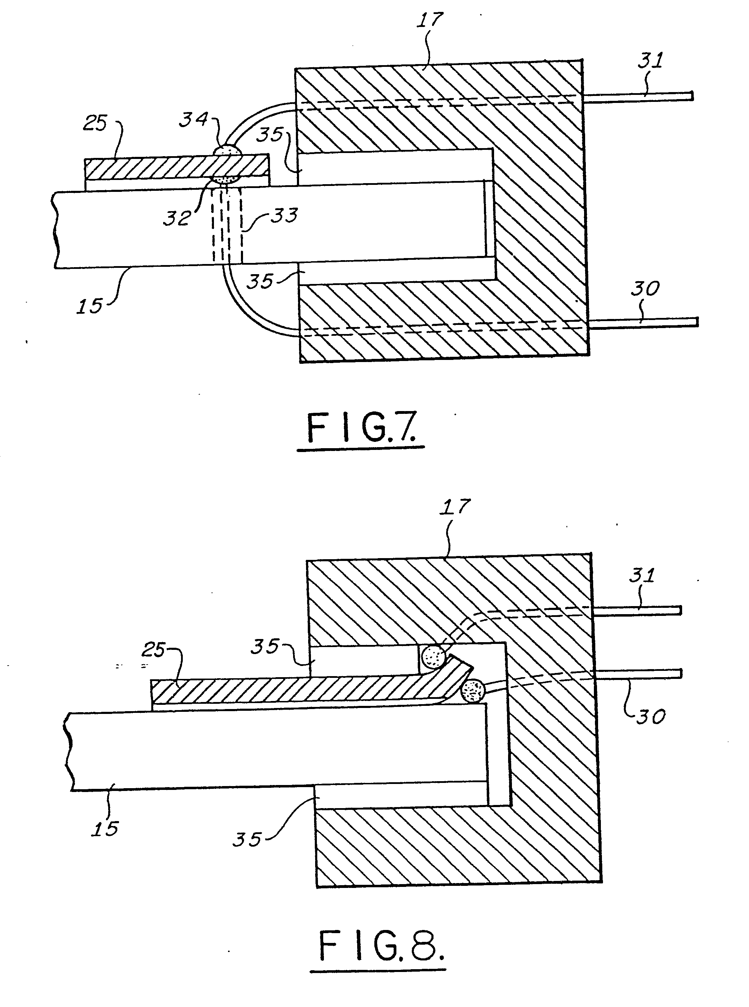

Referring now to Figure 7, the enlarged plan view depicts one strip of piezoelectric polymer 25 affixed to the flexible membrane 15. The piezoelectric polymer strip 25 is shown as being affixed to the flexible membrane 15 near the membrane holder 17. Preferably, each piezoelectric strip is fabricated from a piece of $PVF_2$ (polyvinylidene fluoride $[-CH_2 \, CF_2-]_n$) approximately 0.001" (0.025mm) thick which is metallised on both sides. $PVF_2$ having a sputtered metal coating is a commercially procurable product. A wire lead 30 is attached to the metallised piezoelectric strip 25 by a bead of conductive epoxy 32. A hole 33 approximately 1/16" (1.6mm) in diameter is drilled through the flexible membrane 15, the latter being attached to the membrane holder 17 by layers of epoxy 35. The wire lead 30 is then fed through the hole 33 and nonconductive epoxy is used to affix the metallised piezoelectric strip 25 to the flexible membrane 15. A second wire lead 31 is attached to the metallised piezoelectric strip 25 by a bead of conductive epoxy 34. The wire leads 30, 31 are held in the membrane holders 16 and 17 by epoxy and are connected to respective pairs of connector pins 19, 19' disposed in the plexiglass cover 21.

Referring now to Figure 8, an alternate technique for affixing the piezoelectric polymer strip 25 to the flexible membrane 15 is illustrated. The membrane holder 17 is fabricated from a nonconductive material, or the interior portion is covered with an insulating material. The wire leads 30, 31 are attached by conductive epoxy to respective sides of the metallised piezoelectric polymer strip 25. The flexible membrane 15 and the metallised piezoelectric polymer strips 25 are attached together by epoxy as well as to the membrane holders 16 and 17 by layers of epoxy 35. As before, the leads 30, 31 are also held in the membrane holders 16 and 17 by epoxy.

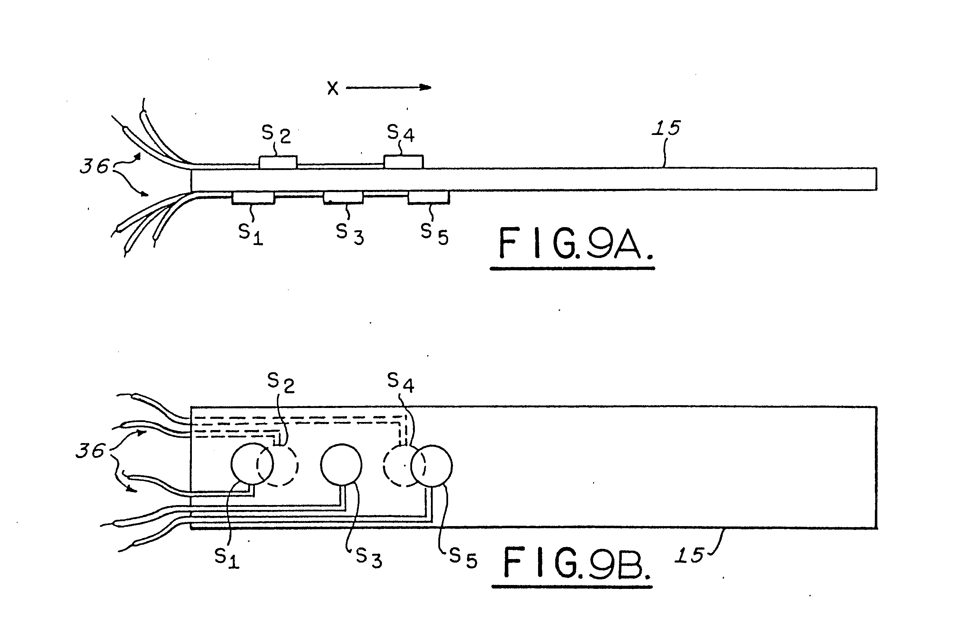

Referring now to Figures 9A and 9B, plan and front views illustrate the flexible membrane 15 in a flattened and extended, as opposed to buckled, disposition. Illustrating the flexible membrane 15 in this disposition is useful in explaining an alternative embodiment of the present invention and useful in explaining the relationship of known points on the flexible membrane 15. An alternate embodiment of the present invention may be realised by fabricating the entire flexible membrane 15 from the piezoelectric polymer $PVF_2$. In known locations on the flexible membrane 15, for example $S_1$, $S_2$, ... $S_j$, the piezoelectric polymer is metallised. It should be noted that when the flexible membrane 15 is undulating in a travelling wave type of displacement inside the channel 12, locations $S_1$, $S_2$, ... $S_j$ on the flexible membrane 15 are displaced in a direction substantially traverse to the X axis which is parallel to the direction of fluid flow as indicated in Figure 9A. Accordingly, when the flexible membrane 15 is undulating, the distance between any two known locations $S_i$ and $S_j$, for example, may be designated as $\Delta X_{ij}$, a substantially constant known distance. Electrical output signals are generated by this undulation or flexing and these signals appear on leads 36 to each of

the metallised locations $S_1$, $S_2$, $S_3$, $S_4$, $S_5$ on the piezoelectric flexible membrane 15 in Figures 9A and 9B.

Referring back to Figures 5 and 6 it can be appreciated that in the preferred embodiment of the present invention there are two piezoelectric polymer strips 25 separated by a substantially constant distance $\Delta X$. In operation, when the flexible membrane 15 undulates, the piezoelectric polymer strips 25 are subject to alternating tension and compression forces which generate output signals on the respective pairs of leads 30, 31. The output signals have a generally sinusoidal waveform. The peak-to-peak time difference $\Delta t_{ij}$ between the two generally sinusoidal waveforms, or the phase difference therebetween, is proportional to the time required for the travelling wave to propagate the distance $\Delta X_{ij}$, i.e. the known distance between the piezoelectric polymer strips 25. Since the distance $\Delta X_{ij}$ is known and since the time difference $\Delta t_{ij}$ may be measured with appropriate electronic devices, the velocity of propagation between points $S_i$ and $S_j$ may be computed using the equation $V_{ij} = \Delta X_{ij}/\Delta t_{ij}$. The travelling wave flowmeter is a positive displacement type of flowmeter, whereby the average velocity of fluid flow is equal to the velocity of propagation of the travelling wave, i.e. $V_{ave} = V_{ij}$. It is well known that volumetric flow rate Q can be computed from the equation $V_{ave} = \frac{Q}{A}$, where A is the cross sectional area of the channel 12. Thus, the volumetric flow through the channel 12 may be computed from the equation:-

$$Q = \frac{A\Delta X_{ij}}{\Delta t_{ij}}$$

Accordingly, it will be appreciated that the response time of the travelling wave flowmeter can be made considerably faster by using the velocity of propagation of the travelling wave rather than by using the frequency of the travelling wave as in the embodiment of Figures 1 and 2. It will be further appreciated that by increasing the number of known locations on the flexible membrane 15 at which an output signal is generated, the response time of the travelling wave flowmeter may be made even faster. For example, if the number of known locations is doubled from two to four, then the response time is halved.

It will be appreciated that the present invention provides a flowmeter of relatively simple construction and which is substantially insensitive to temperature variations in the fluid the flow rate of which is being measured. Furthermore, the flowmeter can have a relatively fast response time if the parameter of the travelling wave generated in the flexure means by fluid flow which is detected is that of velocity of propagation.

Claims

1.     A flowmeter comprising means for conducting fluid the rate of flow of which is to be measured, flexure means arranged to undulate in response to fluid flow, whereby a travelling wave is propagated along the flexure means, and means for detecting a parameter of the travelling wave which is a function of the rate of flow of the fluid.

2.     A flowmeter according to claim 1, wherein the detected parameter of the travelling wave is that of frequency.

3.     A flowmeter according to claim 2, wherein the frequency detecting means includes a light source and a photodetector which is reponsive to light reflected from a retroreflective portion of the flexure means.

4.     A flowmeter according to claim 2, wherein the frequency detecting means includes pressure transducer means.

5.     A flowmeter according to claim 2, wherein the frequency detecting means includes strain gauge means.

6.     A flowmeter according to claim 2, wherein the frequency detecting means includes capacitance means.

7.     A flowmeter according to claim 2, wherein the frequency detecting means includes electromagnetic pick-off means.

8.     A flowmeter according to claim 2, wherein the flexure means is fabricated from a piezoelectric material, and the frequency of the travelling wave is derived from the output signal of the piezoelectric material generated on flexure thereof.

9.     A flowmeter according to any of claims 2 to 8, and further including electronic processing means responsive to the frequency detecting means for providing the rate of flow of the fluid.

10.     A flowmeter according to claim 1, wherein the detected parameter of the travelling wave is that of the velocity of propagation thereof.

11.    A flowmeter according to claim 10, wherein the velocity detecting means includes means for generating output signals at a plurality of known locations on the flexure means.

12.    A flowmeter according to claim 11, wherein the means for generating output signals includes at least two metallised piezoelectric elements affixed to the flexure means and having output leads coupled thereto.

13.    A flowmeter according to claim 12, wherein the piezoelectric elements are also affixed to means for holding the flexure means.

14.    A flowmeter according to claim 11, wherein the velocity detecting means includes strain gauges.

15.    A flowmeter according to claim 11, wherein the flexure means includes a flexible membrane of piezoelectric material having known metallised locations thereon and having output leads coupled to said locations.

16.    A flowmeter according to any of claims 10 to 15, wherein the velocity detecting means includes means for determining the distance $\Delta X_{ij}$ between at least two known locations $i$ and $j$ on the flexure means, means for determining the time $\Delta t_{ij}$ for a travelling wave to propagate between the known locations and means responsive to the distance determining means and to the time determining means for deriving the velocity of propagation in accordance with the following expression:-

$$V_{ij} = \frac{\Delta X_{ij}}{\Delta t_{ij}}$$

17.    A flowmeter according to any of claims 10 to 16, and further including means for providing flow rates which are proportional to the detected velocity of propagation.

18.    A flowmeter according to any of the preceding claims, wherein the flexure means includes a strip of

0052992

flexible material of length X which is forced to occupy a length L, wherein L < X.

19. A flowmeter according to claim 18, wherein the flexure means includes a strip of flexible material having a shape comprised of at least one full wave.

20. A flowmeter according to any of the preceding claims, wherein means are provided for holding at least one end of the flexure means.

21. A flowmeter according to claim 20, wherein means are provided for adjusting at least one of the holding means within the conducting means.

22. A flowmeter according to claim 20 or 21, wherein the or each holding means includes a plurality of passages for fluid flow.

23. A flowmeter according to any of the preceding claims, wherein the conducting means includes a channel having a cover and a fluid inlet and a fluid outlet.

FIG.1.

FIG.2.

P → P

15

L

12

W

X

## FIG.3A.

15

0   0.1   0.2   0.3   0.4   0.5   0.6   0.7   0.8   0.9   1

X/L

## FIG.3B.

FIG.4.

FIG.5.

FIG.6.

F I G.7.

F I G.8.

X ⟶

$S_2$   $S_4$   $15$

36

$S_1$   $S_3$   $S_5$   F I G.9A.

$S_2$   $S_4$

36

$S_1$   $S_3$   $S_5$   F I G.9B.   $15$

| | DOCUMENTS CONSIDERED TO BE RELEVANT | | CLASSIFICATION OF THE APPLICATION (Int Cl ³) |
|---|---|---|---|
| Category | Citation of document with indication, where appropriate, of relevant passages | Relevant to claim | |
| A | DE - A1 - 2 924 675 (BAUER)<br>* Pages 11,12; fig. 7 *<br>---- | 1 | G 01 F 3/00<br>G 01 F 3/20<br>G 01 F 3/24 |

**TECHNICAL FIELDS SEARCHED (Int. Cl. ³)**

G 01 F 1/00
G 01 F 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family corresponding document

| | | | |
|---|---|---|---|
| X | The present search report has been drawn up for all claims | | |
| Place of search<br>VIENNA | Date of completion of the search<br>26-02-1982 | Examiner<br>STÖGER | |

EPO Form 1503.1  06.78